# FASCICULE DE BREVET EUROPEEN

(11) **EP 0 394 106 B1**
(45) Date de publication et mention de la délivrance du brevet: **10.11.1993**
(21) Numéro de dépôt: 90401007.1
(22) Date de dépôt: 12.04.1990
(51) Int. Cl.: F16G 3/16

(54) **Appareil pour la fixation d'agrafes de jonction sur un tapis transporteur ou similaire**
Vorrichtung zur Befestigung von Verbindungselementen an einem Förderband oder dergleichen
Apparatus for applying fastening elements to conveyor belts or the like

(30) Priorité: 21.04.1989 FR 8905325
(43) Date de publication de la demande: 24.10.1990
(73) Titulaire: GORO S.A., F-30340 Saint Privat des Vieux (FR)
(72) Inventeur: Schick, Jean-François, F-75016 Paris (FR)
(74) Mandataire: Boutin, Antoine

(56) Documents cités:
- EP-A- 0 022 007
- FR-A- 1 136 079
- FR-A- 2 507 275
- FR-A- 2 590 955
- GB-A- 2 202 605

## Description

La présente invention est relative à la fixation d'une rangée d'agrafes de jonction sur l'extrémité d'un tapis transporteur ou similaire.

Plus précisément elle concerne la fixation des agrafes du type constitué par des éléments en U adaptés à être disposés à cheval sur une telle extrémité pour y être fixés au moyen de crampons, en fil métallique, affectant la forme d'un U renversé. Cette fixation est assurée par enfoncement de ces crampons à travers des trous prévus dans les deux branches de ces agrafes, puis rabattement des pointes ressortant au-dehors de celles-ci.

Pour faciliter la pose de telles agrafes, celles-ci affectent initialement une forme en V, l'une de leurs branches étant écartée de sa position normale. Dans ces conditions, après avoir placé l'extrémité d'un tapis ou similaire entre les agrafes de la rangée à fixer en place, il faut tout d'abord rabattre la branche initialement ouverte de celles-ci avant de procéder à l'enfoncement des crampons de fixation et au rabattement de leurs pointes.

Il existe actuellement un certain nombre d'appareils conçus pour réaliser ces différentes opérations. Ainsi, le brevet FR 2.590.955 décrit un appareil destiné à assurer la fixation, sur l'extrémité d'un tapis transporteur, d'une rangée d'agrafes de jonction dotées de crampons de fixation disposés en attente. Cet appareil comporte une tête de travail montée coulissante le long d'une plaque susceptible de servir de support à l'extrémité d'un tapis transporteur et à la rangée d'agrafes devant être fixées sur celle-ci. Cette tête de travail comporte, de part et d'autre de la rangée d'agrafes, un poinçon d'enfoncement des crampons de fixation et une matrice mobile destinée à assurer le rabattement des pointes de ceux-ci, ainsi qu'un cliquet d'avancement assurant le déplacement, pas à pas, de la tête de travail en regard des différentes agrafes à fixer.

Cet appareil est actionné à la main par manoeuvre d'un levier dont la rotation commande successivement la descente de la matrice supérieure pour fermer l'agrafe à fixer, puis le relèvement du poinçon assurant l'enfoncement des crampons de fixation de celle-ci. Toutefois, il s'agit là d'une manoeuvre qui requiert un effort physique important. Or celui-ci doit être répété autant de fois qu'il y a d'agrafes à fixer. Dans ces conditions, la fixation d'une rangée d'agrafes constitue une opération pénible et de durée relativement longue.

C'est pourquoi la présente invention a pour but de réaliser un appareil du même genre mais qui est conçu de façon que les outils mobiles de la tête de travail soient actionnés par un vérin pneumatique ou hydraulique. Une solution de ce genre a déjà été proposée dans certains appareils destinés au même travail. Cependant les appareils proposés jusqu'ici à cet effet sont relativement complexes et coûteux, alors que l'appareil selon l'invention est justement conçu de façon à comporter des mécanismes relativement simples et peu coûteux.

A cet effet, cet appareil est essentiellement caractérisé en ce que :
- le poinçon d'enfoncement et le support de la matrice mobile de la tête de travail de cet appareil sont actionnés par un tiroir monté coulissant à l'intérieur de cette tête de travail et qui est lui-même actionné par le piston d'un vérin de commande, pneumatique ou hydraulique,
- ce tiroir comporte deux cames distinctes agissant respectivement sur le support de la matrice mobile et sur le poinçon d'enfoncement, l'agencement et le profil de ces cames étant tels que la première agit en premier pour assurer la descente de la matrice mobile, avant que la seconde commande le relèvement du poinçon d'enfoncement.

Ainsi les mécanismes prévus sont relativement simples et ils sont néanmoins en mesure d'assurer automatiquement les différentes opérations à réaliser, sans que l'opérateur ait à effectuer un effort quelconque, abstraction faite de l'avance de la tête de travail et de la commande de la mise en fonctionnement de celle-ci.

Selon une autre caractéristique du présent appareil, l'axe de déplacement du tiroir coulissant est parallèle au plan de la plaque de guidage destinée à servir de support à l'extrémité d'un tapis transporteur et cet axe est par ailleurs perpendiculaire à l'axe de coulissement de la tête de travail sur cette plaque.

Selon une autre caractéristique encore, le piston du vérin de commande agit sur le tiroir coulissant par l'intermédiaire d'une bielle brisée formant un mécanisme à genouillère dont l'axe de pliage est relié par une biellette au corps de la tête de travail.

L'agencement ainsi prévu à l'avantage de permettre une grande démultiplication des efforts exercés. En conséquence, il est possible d'utiliser un vérin de commande ayant une puissance relativement réduite.

Cependant d'autres particularités et avantages du présent appareil apparaitront au cours de la description suivante. Celle-ci est donnée en référence aux dessins annexés à simple titre indicatif, et sur lesquels :

La figure 1 est une vue en perspective d'ensemble du présent appareil.

La figure 2 en est une vue transversale en coupe selon la ligne II-II de la figure 1, mais à échelle différente, les outils mobiles de la tête de travail étant représentés en position d'attente.

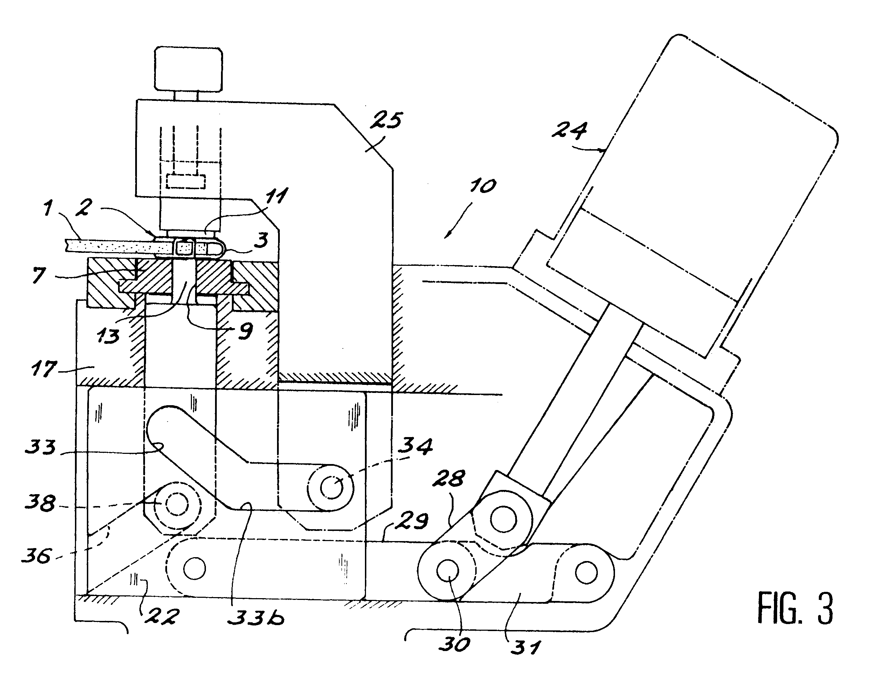

La figure 3 est une vue en coupe similaire sur laquelle les outils mobiles sont représentés en position de travail.

La figure 4 est une vue en coupe longitudinale de la tête de travail du présent appareil selon la ligne IV-IV de la figure 2.

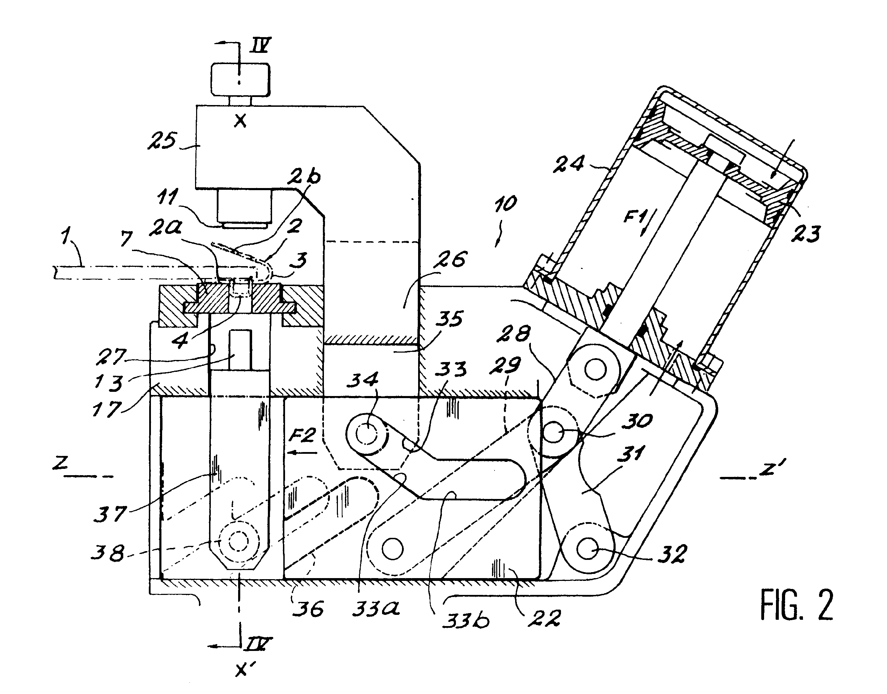

Comme déjà indiqué, le présent appareil est conçu de façon à assurer les différentes opérations nécessaires pour la fixation, sur l'extrémité d'un tapis transporteur 1, d'une rangée d'agrafes 2 destinées à permettre la jonction de celle-ci avec une autre extrémité de ce tapis. Les agrafes à fixer en place sont du type constitué par des éléments en forme de U comportant deux branches 2a et 2b reliées par des charnons 3 aptes à être réunis, au moyen d'un axe, avec les charnons d'une autre rangée similaire d'agrafes de jonction. L'une des deux branches de ces agrafes, en l'occurrence leur branche 2a, porte deux crampons de fixation 4 en fil métallique ayant chacun la forme d'un U renversé. Ces crampons sont alors montés en attente d'utilisation, c'est-à-dire que seules leurs pointes sont engagées à l'intérieur des trous de passage prévus dans cette branche 2a des agrafes. Ces crampons sont donc disposés en saillie à l'extérieur des agrafes (voir figure 2). Quant à la branche opposée 2b de ces dernières, elle affecte alors une forme "ouverte", c'est-à-dire qu'elle se trouve placée dans une position écartée de sa position normale dans laquelle elle sera disposée parallèlement à l'autre branche.

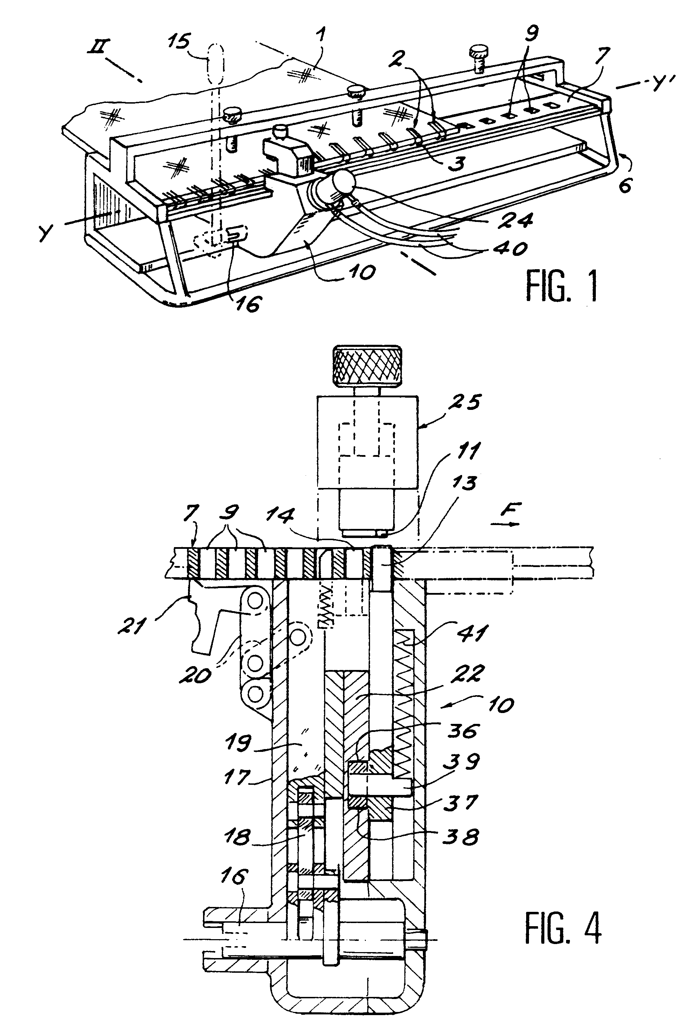

Le présent appareil comporte un bâti 6 supportant une plaque 7 destinée à servir de support à la rangée d'agrafes 4 qui doit être fixée sur le bord du tapis 1. En conséquence, la longueur du bâti 6 et de la plaque 7 est légèrement supérieure à la largeur du tapis 1 pour permettre la mise en place de l'extrémité de ce tapis sur la plaque 7 comme représenté sur la figure 1, les agrafes 2 étant alors disposées à cheval sur le bord de ce tapis.

Cependant, la plaque 7 a également pour fonction d'assurer le guidage des crampons 3 de fixation lors de l'enfoncement. A cet effet, elle comporte une série d'ouvertures 9 destinées à recevoir chacune les deux crampons 4 disposés en attente sur la branche 2a d'une agrafe déterminée. Dans ces conditions, il convient de placer le tapis 1 et la rangée d'agrafes 2 en orientant ces dernières de façon que leur branche 2a se trouve placée vers le bas afin de pouvoir engager les crampons 4 à l'intérieur des ouvertures 9 de la plaque 7 de guidage. Ceci détermine du reste une position rigoureusement précise des agrafes.

La plaque 7 sert par ailleurs de rail de guidage pour la tête mobile de travail du présent appareil, celle-ci étant désignée par la référence générale 10. Ainsi, cette tête de travail peut être déplacée sur toute la largeur du tapis transporteur 1 pour fixer, l'une après l'autre, les différentes agrafes 2 qui doivent être rapportées sur l'extrémité de ce tapis.

De part et d'autre de la position de la rangée d'agrafes 2, la tête de travail 10 comporte deux groupes d'outils destinés à agir sur ces agrafes et sur leur crampon de fixation 4, en l'occurrence :
- d'une part, une matrice mobile 11 située au dessus de la rangée d'agrafes 2,
- d'autre part, au dessous de la rangée d'agrafes 2, deux poinçons 13 et 14 montés mobiles dans le sens vertical et qui sont destinés à être engagés dans deux ouvertures voisines 9 de la plaque 7.

De préférence, la tête de travail 5 est conçue pour agir sur les crampons de fixation 4 de deux agrafes voisines 2 de jonction à deux stades différents de fixation de ces crampons, comme cela est du reste également le cas dans l'appareil décrit dans le brevet FR 2.590.955 mentionné précédemment.

C'est la raison pour laquelle il est prévu deux poinçons distincts 13 et 14 au-dessous de la rangée d'agrafes 2. Le premier poinçon 13 est destiné à assurer l'enfoncement des deux crampons 4 de fixation d'une agrafe 2, cependant que le second poinçon 14 est prévu pour servir d'enclume pour l'appui des deux crampons 4 de l'agrafe 2 précédente, lors du sertissage final des pointes de ces crampons, celles-ci ayant subi précédemment un début de rabattement lors de l'enfoncement initial des crampons correspondants. Quant à la matrice 11, elle comporte deux groupes distincts de rainures disposées en regard des pointes des crampons des deux agrafes voisines 2. Les rainures du premier groupe sont inclinées de façon à assurer un début de rabattement des pointes des crampons correspondants, par exemple à 45°. Quant aux rainures du second groupe, elles sont de faible profondeur de façon à assurer le sertissage final des pointes des crampons de l'agrafe 2 précédente.

La tête mobile de travail 10 comporte également des moyens aptes à assurer son immobilisation dans chacune de ces positions successives de fonctionnement, c'est-à-dire dans chaque position pour laquelle cette tête de travail est apte à assurer d'une part l'enfoncement des crampons de fixation 4 sur une agrafe 2 déterminée et le sertissage final des pointes des crampons 4 sur l'agrafe 2 précédente.

Dans l'exemple représenté à la figure 4, l'immobilisation de la tête mobile 10 dans chacune de ses positions de travail est assurée par le second poinçon 14 déjà mentionné, et ce par engagement de celui-ci à l'intérieur d'une ouverture 9 de la plaque horizontale 7. Le relèvement de ce poinçon dans sa position de blocage est commandé par le mécanisme qui est prévu pour assurer l'avance pas à pas de la tête de travail. Ce mécanisme comporte un levier manuel de commande 15 solidaire d'un axe 16 monté rotatif à l'intérieur du corps 17 de la tête de travail. Cet axe est accouplé, par l'intermédiaire de biellettes 18, avec un coulisseau 19 monté coulissant dans le sens vertical à l'intérieur de la tête de travail. Par l'intermédiaire de biellettes 20, ce coulisseau peut actionner un cliquet 21 destiné à venir en prise successivement dans chaque ouverture 9 de la plaque horizontale 7 afin de pousser la tête mobile de travail 10 dans le sens de la flèche F pour la déplacer pas à pas d'une position de travail à la suivante. Cependant le coulisseau 19 assure par ailleurs le relèvement du second poinçon 14, qui joue deux rôles différents, à savoir :
- d'une part celui d'un organe de blocage de la tête mobile 10 dans chacune de ses positions de travail,
- et d'autre part, la fonction d'une enclume d'appui pour la tête des crampons 4 d'une agrafe lors du sertissage final de la pointe de ces crampons.

Selon la principale caractéristique du présent appareil, les déplacements de la matrice supérieure 11 et du poinçon d'enfoncement 13 sont commandés par un tiroir coulissant 22 actionné par le piston 23 d'un vérin de commande 24, à fonctionnement hydraulique ou pneumatique.

Avant de décrire ce dispositif d'entraînement, il convient de noter que la matrice supérieure 11 est portée par une potence 25 dont le pied 26 est monté coulissant dans le sens vertical à l'intérieur du corps 17 de la tête de travail 10. Quant au poinçon inférieur 13 d'enfoncement, il est lui-même monté coulissant dans le sens vertical selon l'axe X-X′ à l'intérieur d'un alésage 27 pratiqué dans le corps 17 de la tête de travail.

Le tiroir 22 d'actionnement est disposé à angle droit par rapport à l'axe Y-Y′ de coulissement de la tête de travail 10. Ce tiroir est monté coulissant selon un axe Z-Z′ qui est à la fois parallèle à la plaque 7 et perpendiculaire à l'axe X-X′ de déplacement du poinçon 13.

Le tiroir 22 est actionné par le piston 23 du vérin de commande 24 par l'intermédiaire d'une bielle brisée 28-29 dont l'axe intermédiaire 30 est relié par une biellette 31 au corps 17 de la tête de travail. L'accouplement existant ainsi entre le vérin 23 et le tiroir 22 constitue donc un mécanisme à genouillère.

Ce tiroir comporte deux cames distinctes destinées à commander respectivement la potence mobile 25 et le poinçon 13 d'enfoncement. Ces deux cames sont conçues pour agir successivement l'une après l'autre afin que la descente de la matrice supérieure 11 ait lieu avant le relèvement du poinçon d'enfoncement 13.

La première came consiste en une fente 33 à l'intérieur de laquelle est engagée un axe 34 pourvu d'un galet de roulement et qui est porté par les deux joues d'une chape 35 terminant le pied 26 de la potence mobile 25. La fente 33 ainsi prévue présente une forme coudée de façon à comporter, en direction de la plaque horizontale fixe 7, une première branche 33a qui est relevée dans une position oblique, et du côté opposé, une seconde branche 33b qui s'étend horizontalement.

Quant à la seconde came prévue sur le tiroir d'actionnement 22, elle consiste en une rainure 36 ménagée sur la face de ce tiroir qui est tournée en regard du poinçon 13, un décalage de position dans le sens longitudinal existant entre ces deux pièces. Cette rainure 36 s'étend en oblique et elle débouche, à son extrémité la plus basse, sur le bord libre de la plaque verticale qui constitue le tiroir 22 (voir figure 2).

En regard de l'entrée de cette rainure 36, le pied 37 du poinçon d'enfoncement 13 porte un galet 38 monté rotatif autour d'un axe 39. Ce galet est destiné à pénétrer dans la rainure 36 lorsque le tiroir 22 est déplacé en direction du poinçon 13, et ce afin de commander alors le relèvement de celui-ci.

Le fonctionnement du présent appareil est le suivant :

### 1°- Changement de position de la tête de travail :

L'avance de celle-ci, d'une position de travail à la suivante, ayant été assurée par manoeuvre du levier 15, le second poinçon 14 se trouve en position relevée comme représenté sur la figure 4.

Cependant tous les autres organes mobiles de la tête de travail se trouvent alors dans la position d'attente représentée à la figure 2.

En conséquence, la potence 25 est en position relevée, cependant que le poinçon 13 se trouve dans sa position basse. Quant au tiroir d'actionnement 22, il est placé à l'extrémité de sa course en direction du vérin de commande 24. Enfin, le piston 23 de ce dernier est lui-même en position relevée.

Il convient de noter que l'axe 34 porté par le pied de la potence 25 se trouve alors à l'extrémité supérieure de la fente coudée 33 formant came de commande. Quant au galet 38 porté par le pied du poinçon 13, il est alors en dehors de la rainure 36 constituant la came de commande de celui-ci, mais disposé en regard de l'ouverture de cette rainure.

### 2. Fermeture d'une agrafe :

La mise en fonctionnement du vérin de commande 14 a pour effet de faire coulisser le piston 23 de celui-ci dans le sens de la flèche F1. Dans ces conditions, ce vérin repousse le tiroir 22 dans le sens de la flèche F2 par l'intermédiaire du mécanisme à genouillère 28-29-31.

Le début de déplacement du tiroir 22 a pour effet de provoquer la descente de la potence 25 par l'intermédiaire de la came constituée par la fente coudée 33. En conséquence, la matrice 11 vient alors en appui sur la branche relevée 2b de l'agrafe 2 correspondante pour rabattre et fermer cette branche contre l'extrémité du tapis 1.

### 3°- Sertissage simultané des pointes des crampons de l'agrafe précédente :

En même temps qu'elle assure la fermeture de la branche 2b d'une agrafe 2, la descente de la matrice 11 a pour effet d'effectuer le sertissage final des pointes des crampons de fixation 4 portés par l'agrafe 2 précédente. Lors de cette opération, la tête de ces crampons prend appui sur le second poinçon 14 qui se trouve déjà en position relevée.

### 4°- Enfoncement des crayons dans l'agrafe qui vient d'être fermée :

La poursuite du coulissement du tiroir 22 dans le sens de la flèche F2, a pour effet que le galet 38, porté par le pied du poinçon d'enfoncement 13, est amenée à s'engager dans la rainure 36 de ce tiroir. Du fait de la disposition en oblique de cette rainure, la poursuite du déplacement du tiroir 22 provoque le relèvement du poinçon 13 et par suite l'enfoncement des crampons 4 de l'agrafe considérée. Les pointes de ces crampons se trouvent donc enfoncées à travers l'extrémié 1 du tapis transporteur et leurs extrémités sont amenées à s'engager dans les trous prévus dans la branche supérieure 2b de l'agrafe 2 correspondante.

### 5°- Rabattement partiel des pointes de ces crampons :

La poursuite du déplacement du tiroir 22 jusqu'à l'extrémité de sa course a pour effet que le poinçon 13 continue à repousser les crampons 4 correspondants jusqu'à ce que leurs pointes s'engagent dans les rainures prévues dans la matrice mobiles 11 en correspondance de ceux-ci. Ceci provoque un rabattement partiel de ces pointes à 45°.

### 6°- Retour de la tête de travail en position d'attente et avance d'un nouveau pas :

Ce retour est commandé par le relèvement du piston 23 du vérin 24, le poinçon 13 étant alors repoussé en position basse par un ressort 41. Ceci ramène donc l'ensemble des organes mobiles dans sa position représentée à la figure 2, à l'exception toutefois du second poinçon 14 associé au mécanisme d'avance pas à pas.

Ce mécanisme peut alors être actionné au moyen du levier 15 pour déplacer la tête mobile 10 dans la position suivante de travail.

En dehors de cette manoeuvre, il suffit à l'opérateur de commander le fonctionnement de la tête mobile 10 dans chacune de ses positions de travail. Cette commande peut être assurée par manoeuvre d'une valve d'inversion (non représentée) assurant l'alimentation de deux canalisations 40 aboutissant au vérin 24. L'inversion des communications assurées par cette valve peut avoir lieu automatiquement après que le tiroir 22 soit parvenu à l'extrémité de sa course de déplacement en directement de la plaque de guidage 7.

Ainsi, l'opérateur n'a plus aucun effort physique à fournir pour la fixation d'une rangée d'agrafes 2 sur l'extrémité d'un tapis transporteur 1. Or la tête de travail du présent appareil est en mesure d'assurer la succession des différentes opérations voulues au moyen de mécanismes relativement simples et peu coûteux, lesquels ont également l'avantage de présenter une grande fiabilité. De plus, du fait même de la conception de ces mécanismes, ceux-ci sont en mesure d'assurer une grande démultiplication des efforts exercés. En conséquence, il est possible d'utiliser un vérin de commande de puissance relativement réduite. Par ailleurs, le présent appareil permet d'obtenir une régularité d'enfoncement et de sertissage des crampons de fixation beaucoup plus grands que dans le cas où ces opérations sont réalisées de façon manuelle.

Bien entendu, le présent appareil n'est pas limité à la seule forme de réalisation décrite ci-dessus. En effet, celle-ci peut donner lieu à de nombreuses variantes. Ainsi, le mécanisme d'avance pas à pas pourrait être commandé de façon hydraulique ou pneumatique de même que la tête de travail 10 et sa commande pourrait alors être associée à celle de celle-ci au moyen d'un système programmateur assurant la succession des différentes opérations voulues pour réaliser d'une part le déplacement pas à pas de la tête de travail 10 et d'autre part la mise en fonctionnement de celle-ci dans chacune de ses positions de travail.

## Revendications

1. Appareil pour la fixation, sur l'extrémité d'un tapis transporteur, d'une rangée d'agrafes de jonction dotées de crampons de fixation disposés en attente, au moyen d'une tête de travail montée coulissante le long d'une plaque de guidage de ces crampons et comportant, de part et d'autre de la rangée d'agrafes à fixer, un poinçon d'enfoncement des crampons et une matrice mobile destinée à assurer le rabattement des pointes de ceux-ci, ainsi qu'un cliquet d'avancement assurant le déplacement, pas à pas, de la tête de travail en regard des différentes agrafes à fixer, caractérisé en ce que :
- le poinçon d'enfoncement (13) et le support (25) de la matrice mobile (11) sont actionnés par un tiroir (22) monté coulissant à l'intérieur de la tête de travail (10) et qui est lui-même actionné par le piston (23) d'un vérin de commande (24), pneumatique ou hydraulique,
- ce tiroir (22) comporte deux cames distinctes (33 et 36) agissant respectivement sur le support (25) de la matrice mobile (11) et sur le poinçon d'enfoncement (13), l'agencement et le profil de ces cames étant tels que la première (33) agit en premier pour assurer la descente de la matrice mobile (11), avant que la seconde (36) commande le relèvement du poinçon d'enfoncement (13).

2. Appareil de fixation selon la revendication 1, caractérisé en ce que l'axe (Z-Z′) de déplacement du tiroir coulissant (22) est parallèle au plan de la plaque de guidage (7) destinée à servir de support à l'extrémité (1) d'un tapis transporteur et cet axe est à la fois perpendiculaire à l'axe (Y-Y′) de coulissement de la tête de travail (10) sur cette plaque.

3. Appareil de fixation selon la revendication 1 ou 2, caractérisé en ce que le piston (23) du vérin de commande (24) agit sur le tiroir coulissant (22) par l'intermédiaire d'une bielle brisée (28-29) formant un mécanisme à genouillère dont l'axe de pliage (30) est relié par une biellette (31) au corps de la tête de travail (10).

4. Appareil de fixation selon l'une des revendications précédentes, caractérisé en ce que le support de la matrice mobile (11) consiste en une potence (25) dont le pied (26) coulisse à l'intérieur de la tête de travail (10) pour être accouplé avec la came correspondante (33) de commande prévue sur le tiroir coulissant (22).

5. Appareil de fixation selon la revendication 4, caractérisé en ce que la came (33) de commande de la potence (25) portant la matrice mobile (11) consiste en une rainure ou fente coudée (33) prévue sur le tiroir coulissant (22) et à l'intérieur de laquelle est engagé un axe (34) porté par le pied (26) de cette potence (25).

6. Appareil de fixation selon l'une des revendications précédentes, caractérisé en ce que la came de commande du poinçon d'enfoncement (13) consiste en une rainure ou fente (36) s'étendant en oblique dans le tiroir coulissant (22) et qui est apte à recevoir un galet (38) porté par le pied (37) de ce poinçon (13).

7. Appareil de fixation selon l'une des revendications précédentes, dans lequel la matrice mobile comporte deux parties distinctes aptes à agir à deux stades différents sur les pointes des crampons de fixation de deux agrafes successives, caractérisé en ce qu'en plus du poinçon (13) d'enfoncement des crampons de fixation (4) de l'une de ces agrafes (2), il est prévu un second poinçon (14) apte à servir d'enclume d'appui pour la tête des crampons de fixation (4) de l'agrafe précédente (2), ce second poinçon étant amené le premier en position de travail par l'actionnement du mécanisme d'avance pas à pas de la tête de travail (10) auquel il est associé.

## Patentansprüche

1. Vorrichtung zur Befestigung einer Reihe von Verbindungsklammern, die mit in Bereitschaft angeordneten Befestigungshaken versehen sind, auf dem Rand eines Transportbandes unter Zuhilfenahme eines Arbeitskopfes, der verschiebbar entlang einer Führungsplatte für diese Haken montiert ist, und beiderseits der Reihe von den zu befestigenden Klammern einen Lochstempel zum Eintreiben der Haken und eine bewegliche Matrize, die dafür bestimmt ist, den Umschlag der Spitzen derselben zu sichern, sowie eine Vorschubschaltklinke zur Sicherstellung der schrittweisen Verschiebung des Arbeitskopfes im Hinblick auf die verschiedenen zu befestigenden Klammern enthält, **dadurch gekennzeichnet**, **daß** :
- Der Eintreiblochstempel (13) und die Einspannplatte (25) der beweglichen Matrize (11) durch einen Schieber (22), der verschiebbar im Inneren des Arbeitskopfes (10) montiert ist, angetrieben werden, und der selbst durch den Kolben (23) eines pneumatischen oder hydraulischen Schaltzylinders (24) betätigt wird,
- dieser Schieber (22) zwei verschiedene Nocken (33 und 36) enthält, die jeweils die Einspannplatte (25) der beweglichen Matrize (11) und den Eintreiblochstempel (13) betätigen, wobei die Anordnung und die Profile dieser Nocken derart sind, daß der erste (33) zur Sicherstellung der Abwärtsbewegung der beweglichen Matrize (11) zuerst wirkt, bevor der zweite (36) die Anhebung des Eintreiblochstempels (13) steuert.

2. Befestigungsvorrichtung nach Anspruch 1, **dadurch gekennzeichnet,** **daß** die Verschiebeachse (Z-Z') des verschiebbaren Schiebers (22) parallel zur Ebene der Führungsplatte (7) liegt, die dafür bestimmt ist, den Rand (1) eines Transportbandes abzustützen, und diese Achse gleichzeitig senkrecht zur Achse (Y-Y') der Verschiebung des Arbeitskopfes (10) auf dieser Platte steht.

3. Befestigungsvorrichtung nach Anspruch 1 oder 2, **dadurch gekennzeichnet,** **daß** der Kolben (23) des Schaltzylinders (24) den verschiebbaren Schieber (22) mittels einer abgekanteten Stange (28-29), die einen Kniehebelmechanismus bildet, deren Biegeachse (30) mit dem Gehäuse des Arbeitskopfes (10) durch einen Schwingarm (31) verbunden ist, betätigt.

4. Befestigungsvorrichtung nach einem der vorhergehenden Ansprüche, **dadurch gekennzeichnet,** **daß** die Einspannplatte der beweglichen Matrize aus einem Träger (25) besteht, dessen Fuß (26) im Innern des Arbeitskopfes (10) gleitet, um mit dem entsprechenden, auf dem verschiebbaren Schieber (22) vorgesehenen Betätigungsnocken (33) fest verbunden zu werden.

5. Befestigungsvorrichtung nach Anspruch 4, **dadurch gekennzeichnet,** **daß** der Betätigungsnocken (33) des die bewegliche Matrize (11) haltenden Trägers (25) aus einer abgewinkelten Nut oder Spalte (33) besteht, die auf dem verschiebbaren Schieber (22) vorgesehen ist, und in die innen eine von dem Fuß (26) dieses Trägers (25) gehaltene Achse (34) eingelassen ist.

6. Befestigungsvorrichtung nach einem der vorhergehenden Ansprüche, **dadurch gekennzeichnet**, **daß** der Betätigungsnocken des Eintreiblochstempels (13) aus einer Nut oder Spalte (36) besteht, die sich schräg in den verschiebbaren Schieber (22) erstreckt, und die eine vom Fuß (37) dieses Lochstempels (13) gehaltene Rolle (38) aufnehmen kann.

7. Befestigungsvorrichtung nach einem der vorhergehenden Ansprüche, in welcher die bewegliche Matrize zwei unterschiedliche Teile enthält, die in zwei verschiedenen Stadien auf die Spitzen der Befestigungshaken von zwei aufeinanderfolgenden Klammern einwirken, **dadurch gekennzeichnet,** **daß** außer dem Lochstempel (13) zum Eintreiben der Befestigungshaken (4) von einer dieser Klammern (2) ein zweiter Lochstempel (14) vorgesehen ist, der als Auflageamboß für den Kopf der Befestigungshaken (4) der vorhergehenden Klammer (2) dienen kann, wobei dieser zweite Lochstempel den ersten durch den Antrieb des schrittweisen Vorschubmechanismus des Arbeitskopfes (10), mit dem er verbunden ist, in Arbeitsposition bringt.

## Claims

1. An apparatus for fixing onto an end of a conveyor belt a row of linking fasteners provided with fastening clamps disposed in a waiting position by means of a working head being slidably mounted along a plate provided for guiding said clamps and comprising, on both sides of the row of fasteners to be fixed, a punch for driving-in said clamps and a movable die intended for turning down the spikes of said clamps, and a driver pawl causing a stepwise displacement of the working head in registry with the various fasteners to be fixed,
**characterized in that** :
- the driving-in punch (13) and the support (25) of the movable die (11) are actuated by a sliding member (22) slidably mounted inside the working head (10), said sliding member (22) being driven by the piston (23) of a pneumatic or hydraulic actuating cylinder (24),
- said sliding member (22) comprises two separate cams (33 and 36) respectively acting upon the support (25) of the movable die (11) and upon the driving-in punch (13), the arrangement and profile of said cams being such that the first cam (33) acts in the first place for driving the movable die (11) down before the second cam (36) causes the driving-in punch (13) to rise up.

2. A fixation apparatus according to Claim 1, characterized in that the (Z-Z') axis of displacement of the sliding member (22) is parallel with the plane of the guiding plate (7) intended for serving as a support for the end (1) of a conveyor belt, said axis being perpendicular to the axis (Y-Y') of the sliding movement of the working head (10) along said guiding plate (7).

3. A fixation apparatus according to Claim 1 or 2, characterized in that the piston (23) of the actuating cylinder (24) acts upon the sliding member (22) through the intermediary of a hinged rod (28-29) forming a knuckle mechanism, the hinge axis (30) thereof being connected by a link (31) to the body of the working head (10).

4. A fixation apparatus according to one of the preceding Claims, characterized in that the support of the movable die (11) consists of a bracket (25) the foot (26) of which is slidable inside the working head (10) for being coupled with the corresponding actuating cam (33) provided on the sliding member (22).

5. A fixation apparatus according to Claim 4, characterized in that the cam (33) for actuating the bracket (25) carrying the movable die (11) consists of an angled groove or slot (33) provided on the sliding member (22) and inside which is engaged a shaft (34) carried by the foot (26) of said bracket (25).

6. A fixation apparatus according to one of the preceding Claims, characterized in that the cam for driving the driving-in punch (13) consists of a groove or slot (36) extending obliquely in the sliding member (22) and being adapted for receiving a cam follower (38) carried by the foot (37) of said punch (13).

7. A fixation apparatus according to one of the preceding Claims, wherein the movable die comprises two separate portions adapted for acting at two different stages upon the spikes of the fixation clamps of two successive fasteners,
**characterized** in that there is provided, in addition to the punch (13) provided for driving-in the fixation clamps (4) of one of said fasteners (2), a second punch (14) adapted for serving as a back-up anvil for the head of the fixation clamps (4) of the preceding fastener (2), said second punch being the first to be brought into its working position through the actuation of the mechanism causing the stepwise forward movement of the working head (10), to which mechanism the second punch is associated.
